# EUROPÄISCHE PATENTANMELDUNG

(11) **EP 2 853 480 A1**
(43) Veröffentlichungstag der Anmeldung: **01.04.2015**
(21) Anmeldenummer: 14186945.3
(22) Anmeldetag: 30.09.2014
(51) Int. Cl.: B63B 35/00, B63B 17/00, B63B 39/00

(54) **Schwimmfähiger Lastenträger zum Transport von Ladegütern**

(30) Priorität: 30.09.2013 DE 102013219693
(71) Anmelder: BLG Logistics Solutions GmbH & Co. KG, 28197 Bremen (DE); BVT Brenn- und Verformungstechnik Bremen GmbH, 28755 Bremen (DE); H & P Offshore Wind GmbH & Co. KG, 28355 Bremen (DE)
(72) Erfinder: Wellbrock, Andreas, 28357 Bremen (DE); Rönner, Thorsten, 27616 Beverstedt (DE); Felderhoff, Heiko, 28359 Bremen (DE)
(74) Vertreter: Eisenführ Speiser

(57) **Zusammenfassung**

Die Erfindung betrifft einen schwimmfähigen Lastenträger, insbesondere Feederschiff oder Ponton, zum Transport von Ladegütern (6, 6'), wie Gründungsstrukturen für Windkraftanlagen oder dergleichen, mit wenigstens einem Deck (3) für die aufzunehmenden Ladegüter (6, 6').

Erfindungsgemäß wird diese Aufgabe gelöst durch eine relativ zum Lastenträger (1) auf dessen Deck (3) beweglich ausgebildete Auflagefläche für das Ladegut (6, 6') und eine elektronische Steuereinheit, welche zur Steuerung der Bewegung der Auflagefläche derart eingerichtet ist, dass Neigebewegungen des Lastenträgers (1) kompensiert werden.

## Beschreibung

Die Erfindung betrifft einen schwimmfähigen Lastenträger, insbesondere ein Feederschiff oder Ponton, zum Transport von Schwerlast-Ladegütern, wie Gründungsstrukturen für Windkraftanlagen oder dergleichen, mit wenigstens einem Deck , vorzugsweise zwei oder mehr Decks (Haupt- und Laderaumdeck(s)) für die aufzunehmenden Ladegüter sowie ein Verfahren zum Verladen von Schwerlast-Ladegütern von einem oder auf einen schwimmfähigen Lastenträger.

Es ist bekannt, schwimmfähige Lastenträger, wie Frachtschiffe, Pontons oder dergleichen, für den Transport von Schwerlast-Ladegütern auf dem Seeweg einzusetzen, um die zu transportierenden Ladegüter an ihren jeweiligen Bestimmungsort zu transportieren. In bestimmten Transportfällen können die zu transportierenden Schwerlast-Ladegüter, oder Teile davon, aufgrund ihrer äußeren Abmessungen bisweilen nicht innerhalb des Rumpfes des Lastenträgers verstaut werden. Solche Ladegüter, zu denen zum Beispiel Gründungsstrukturen für Windkraftanlagen zählen, sind üblicherweise auf dem als Deck ausgebildeten Hauptdeck des Lastenträgers aufgenommen und auf diesem gesichert. Für den Transport, gegebenenfalls den Umschlag und die Errichtung dieser Schwerlast-Ladegüter existieren zwei grundlegende Konzepte.

Zum einen gibt es das Mono-Vessel-Konzept, bei dem der schwimmfähige Lastenträger sowohl zum Transport zum Bestimmungsort als auch zur Montage bzw. zum Errichten der Offshore-Windkraftanlagen genutzt wird. Dieses Konzept hat den Vorteil, dass die Schwerlast-Ladegüter direkt durch die auf dem Lastenträger vorgesehene Verladeeinheit angehoben und am Ort ihrer geplanten Errichtung abgesetzt werden können. Nachteilig wirkt sich jedoch das geringe Zeitfenster für einen Einsatz der vorrangig für die Errichtung der Gründungsstrukturen hergestellten Errichterschiffe im Baufeld für die Windkraftanlagen aus.

Zum anderen existiert das Feeder-Vessel-Konzept, bei dem ein Errichterschiff im Baufeld der Windkraftanlagen stationiert wird und die zur Errichtung der Windkraftanlage benötigten Schwerlast-Ladegüter von einem separaten schwimmfähigen Lastenträger, wie einem Feederschiff oder einem Ponton, angeliefert werden. Die Herausforderung beim Feeder-Vessel-Konzept besteht dann insbesondere bei der Übergabe bzw. Übernahme der auf dem Deck des Lastenträgers transportierten Schwerlast-Ladegüter durch das Errichterschiff auf hoher See, da die Montage der Gründungsstrukturen sowie der Windkraftanlagenteile auch bei schlechten Witterungsbedingungen (beispielsweise bei starkem Wind und hohen Wellen) erfolgen soll. Aufgrund der voneinander getrennten Rümpfe von Errichterschiff und Lastenträger bewegen sich die Verladeeinheit und die Ladegüter relativ zueinander. Somit gestaltet sich das Anschlagen der auf dem Deck des Lastenträgers aufgenommenen Ladegüter speziell bei hohem Wellengang oder starkem Wind an der Verladeeinheit des Errichterschiffes häufig als relativ schwierig oder überhaupt nicht durchführbar.

Vor diesem Hintergrund liegt der vorliegenden Erfindung die Aufgabe zugrunde, ein Lastenträger der eingangs genannten Art und ein Verfahren zum Verladen von Schwerlast-Ladegütern anzugeben, mit denen eine vereinfachte und zugleich sichere Übernahme der auf dem Lastenträger aufgenommenen Schwerlast-Ladegüter durch eine Verladeeinheit auf See ermöglicht ist.

Die Erfindung löst die ihr zugrundeliegende Aufgabe bei einem schwimmfähigen Lastenträger der vorbezeichneten Gattung durch eine relativ zum Lastenträger beweglich ausgebildete Auflagefläche für das Ladegut und eine elektronische Steuereinheit, welche zur Steuerung der Bewegung der Auflagefläche derart eingerichtet ist, dass Neigebewegungen des Lastenträgers kompensiert werden.

Der Erfindung liegt die Erkenntnis zugrunde, das mithilfe einer Auflagefläche für das Schwerlast-Ladegut, welche relativ zum Lastenträger beweglich ausgebildet ist, und durch eine elektronische Steuereinheit, mittels der die Bewegungen der Auflagefläche derart gesteuert werden, dass die Neigebewegungen des Lastenträgers ausgeglichen bzw. kompensiert werden, die Auflagefläche für das Ladegut dauerhaft in einer im, Wesentlichen horizontalen Ausrichtung gehalten werden kann. Damit ist ein Lagenausgleichsystem am Lastenträger geschaffen, mittels dem die Bewegung des Ladegutes, vorzugsweise eines Schwerlast-Ladegutes, auf dem Deck des Lastenträgers zumindest deutlich verringert und bestenfalls aufgehoben wird, so dass das Ladegut auf einfache und sichere Weise an einem Kran oder dergleichen der Verladeeinheit eines Errichterschiffes angeschlagen werden kann. Ebenso sind Relativbewegungen zwischen dem Anschlagbereich eines sich in der Höhe oberhalb des Deckes des Lastenträgers erstreckenden Ladegutes, wobei der Anschlagbereich üblicherweise am oberen Ende des Ladegutes vorgesehen ist und damit selbst bei geringen Neigebewegungen des Lastenträgers stark hin und her schwankt, und dem Anschlagmittel des Errichterschiffes auf ein Minimum reduziert und bestenfalls vermieden. Damit wird zudem die Arbeitssicherheit beim Verladen der Ladegüter verbessert. Die beweglich am Lastenträger aufgenommene Auflagefläche, auf der das Ladegut abgestellt wird, kann beispielsweise ein einteiliger Plattenkörper sein, der einen Abschnitt des Decks am Lastenträger ausbildet. Die Relativbewegung zwischen Auflagefläche und Lastenträger wird durch eine elektronische Steuereinheit derart gesteuert, dass die Auflagefläche in einer bevorzugt horizontalen Ausrichtung gehalten wird.

Eine bevorzugte Weiterbildung der Erfindung sieht vor, dass die Auflagefläche aus mehreren beabstandet zueinander angeordneten Teilflächen auf jeweiligen Lagerböcken ausgebildet ist, wobei die Lagerböcke jeweils höhenverstellbar sind. Mit dem Einsatz von mehreren im Abstand zueinander angeordneten Lagerböcken, deren Aufstellflächen für das Ladegut die Teilflächen der Auflagefläche ausbilden, ist eine konstruktiv einfache Möglichkeit zur Ausbildung der Auflagefläche erreicht. Der Abstand zwischen den Lagerböcken ist derart zu wählen, dass das aufzunehmende Schwerlast-Ladegut sicher auf den Teilflächen der jeweiligen Lagerböcke aufliegt. Durch die in der Höhe verstellbaren Lagerböcke wird die Neigung der aus den Teilflächen bestehenden Auflagefläche relativ zum Lastenträger verändert. Damit lassen sich die Neigebewegungen des Lastenträgers, insbesondere das Rollen des Lastenträgers um seine Längsachse bzw. das Stampfen des Lastenträgers um seine Querachse, auf relative einfache Weise ausgleichen bzw. kompensieren. Das Verstellen der Aufstellflächen der Lagerböcke in ihrer Höhe auf dem Deck des Lastenträgers wird mittels der elektronischen Steuereinheit gesteuert und hat eine Neigung der von den Lagerböden aufgespannten Ebene, in der die Auflagefläche liegt, zur Folge. Mittels der Steuereinheit erfolgt, in Abhängigkeit von der Neigebewegung des Lastenträgers, ein Anheben oder Absenken der Teilfläche eines jeweiligen Lagerbockes relativ zum Lastenträger.

Vorzugsweise sind jeweils drei oder mehr Lagerböcke zu einer Gruppe von Lagerböcken zusammengefasst, die eine sich zwischen den Lagerböcken aufspannende Ebene definieren. Mithilfe von drei Lagerböcken ist ein statisch bestimmtes System geschaffen, mittels dem das zu transportierende Schwerlast-Ladegut ohne das Kipp-Risiko sicher auf den Lagerböcken während des Transports aufgenommen wird.

Jedem Lagerbock ist bevorzugt ein Stellmittel für seine Höhenverstellung zugeordnet. Bevorzugt ist das bzw. sind die Stellmittel jeweils ein elektrischer Stellmotor oder ein druckbetätigter Arbeitszylinder. Mit der Verwendung eines elektrischen Stellmotors, wie zum Beispiel einem Schrittmotor, ist eine exakte Höhenverstellung der Aufstellfläche eines jeweiligen Lagerbockes möglich. Mithilfe eines druckbetätigten Arbeitszylinders lassen sich auf einfache Weise hohe Kräfte erzeugen, mit denen auch Ladegüter mit großen Massen relativ einfach bewegt werden können. Zudem kommt je nach Verfügbarkeit die zum Antrieb des jeweiligen Stellmittels benötigte Energiequelle (elektrischer Strom oder druckbeauftragtes Fluid) für die Höhenverstellung des Lagerböcke zum Einsatz.

Vorzugsweise ist gemäß einer Weiterbildung der Erfindung vorgesehen, dass jeder Lagerbock und das Stellmittel mittels eines Koppelgetriebes miteinander gekoppelt sind, wobei das Koppelgetriebe bevorzugt ein Planetengetriebe aufweist. Über das Koppelgetriebe wird die Kraftübertragung zwischen Stellmittel und Lagerbock gewährleistet, wobei mit dem Koppelgetriebe zudem eine gezielte Übersetzung der vom Stellmittel erzeugten Kräfte bzw. Drehmomente und Drehzahl und der dann vom Koppelgetriebe auf den Lagerbock übertragenen Kräfte bzw. Momente bewirkt wird. Zudem ist mit der Verwendung eines Planetengetriebes eine robuste Ausgestaltung des zur Kraftübertragung zwischen Stellmittel und Lagerbock verwendeten Koppelgetriebes erreicht.

Bevorzugt weist jeder Lagerbock eine Auflagerplatte und weiter vorzugsweise ein mit dem Koppelgetriebe gekoppeltes Führungsteil für eine gerichtete Bewegung der Auflagerplatte im Wesentlichen senkrecht zum Deck auf, wobei die Auflagerplatte relativ zur Bewegungsachse des Führungsteiles neigbar gelagert ist. Mit dem Einsatz einer Auflagerplatte, auf der ein Teil des Ladeguts aufliegt, ist eine robuste Ausgestaltung der Teilfläche der Auflagefläche für das Ladegut geschaffen. Vorzugsweise ist die Auflagerplatte jeweils am oberen freien Ende des Führungsteiles angeordnet, wobei im Verbindungsbereich zwischen der Auflagerplatte und dem oberen Ende des Führungsteiles ein Aufnahmelager ausgebildet ist, das eine Relativbewegung zwischen der Auflagerplatte und dem Führungsteil zulässt. Das verstellbare Aufnahmelager ist bevorzugt als Kugelgelenk ausgebildet, wodurch die Auflagerplatte in ihrer Neigung zur Bewegungsachse des Führungsteiles veränderbar ist. Somit können die Lagerböcke einer jeweiligen Gruppe jeweils unterschiedlich hoch ausgefahren werden, wobei die in ihrer Neigung veränderbar zu den Führungsteilen aufgenommenen Auflagerplatten einer Gruppe von Lagerböcken vorzugsweise in einer gemeinsamen Ebene liegen.

Eine andere Weiterbildung des erfindungsgemäßen Lastenträgers sieht vor, dass die elektronische Steuereinheit, derart signalleitend mit den Stellmitteln der Lagerböcke gekoppelt und dazu eingerichtet ist, die Höhe der Auflagerböcke in Abhängigkeit von den Neigebewegungen des Lastenträgers und/oder der Auflagefläche derart anzupassen, dass die sich zwischen den Lagerböcken jeweils einer Gruppe aufspannende Ebene im Wesentlichen parallel zur Horizontalen ausgerichtet bleibt. Mithilfe der Steuereinheit, welche signalleitend mit den Stellmitteln der Lagerböcke verknüpft ist, lässt sich ein jeweiliger Lagerbock einfach und zugleich exakt ansteuern und somit eine gezielte Höhenverstellung der Aufstellfläche eines jeweiligen Lagerbockes in Abhängigkeit von den Neigebewegungen des Lastenträgers bzw. der mittels der Lagerböcken ausgebildeten Auflagefläche erzielen. Mit der elektronischen Steuereinheit erfolgt bevorzugt eine kontinuierliche bzw. fortwährende Anpassung in der Ausrichtung bzw. Neigung der durch die Lagerböcke ausgebildeten Auflagefläche in jeweils vorgegebenen kurzen Zeitabständen. Die kontinuierliche Anpassung der Ausrichtung der ausgebildeten Auflagefläche zum Lastenträger ist notwendig, da sich dessen Ausrichtung, aufgrund seiner um die Längs- bzw. Querachse auftretenden Neigebewegungen (Roll- und Stampfbewegungen), ebenfalls fortwährend ändert.

Vorzugsweise ist die elektronische Steuereinheit signalleitend mit Sensormitteln zum Erfassen der Neigebewegungen des Lastenträgers und/oder der Auflagefläche verbunden und zum Ermitteln der die Neigebewegungen des Lastenträgers und/oder der Auflagefläche ausgleichenden Stellgrößen für die Stellmittel in Abhängigkeit der erfassten Neigebewegungen ausgebildet. Mit den Sensormitteln werden vorzugsweise die um die Längsachse und die Querachse auftretenden Neigebewegungen des Lastenträgers erfasst. Mithilfe von Datenübertragungsmitteln werden die aufgenommenen Signale an die Steuereinheit weitergeleitet, wobei durch die Sensormittel vorzugsweise eine Signalwandlung und Signalverstärkung vorgenommen wird. Unter signalleitend verbunden ist vorliegend somit eine kabelgebundene oder kabellose Signalübertragung zu verstehen. Die elektronische Steuereinheit ermittelt aus den erfassten Neigebewegungen von Lastenträger und/oder Auflagefläche die notwendigen Stellgrößen für die Stellmittel der einzelnen Lagerböcke, mit denen die unmittelbar zuvor erfasste Veränderung in der Ausrichtung des Lastenträgers ausgeglichen wird. Als Sensormittel zum Erfassen der Neigebewegungen wird vorzugsweise ein Neigungssensor eingesetzt. Vorzugsweise werden als Sensoren sogenannte Kreiselsensoren bzw. Kreiselinstrumente (Drehratensensoren) eingesetzt. Die Sensoren nutzen als Messgröße den Drehimpuls eines rotierenden Kreisels. Die infolge der Kreiselrotation bei Neigungen auftretende Präzession liefert die nötigen Lageänderungsinformationen zur Berechnung der Stellgrößen des Lagenausgleichssystems.

In einer bevorzugten Ausführungsform sind die Lagerböcke entlang einer oder mehrerer Führungen an Deck des Ladeträgers beweglich angeordnet, vorzugsweise parallel zur Längsachse des Lastenträgers. Damit sind die Lagerböcke verfahrbar bzw. verschiebbar auf beispielsweise dem Deck des Lastenträgers angeordnet. Über die beweglich aufgenommenen Lagerböcke ist eine optimale Ausnutzung der Stellfläche auf dem Deck des Lastenträgers gewährleistet und eine Anpassung an die Ladegutgröße möglich. Zudem kann der Lastenträger vorzugsweise an einer Stelle entlang der Längsachse des Lastenträgers beladen werden, von dem aus dann die Ladegüter mithilfe der beweglich aufgenommenen Lagerböcke auf dem Deck des Lastenträgers in ihre Transportposition verfahren werden. Ein aufwendiges Hin- und Herbewegen oder Ausrichten der Verladeeinheit parallel entlang der Längsseite des Lastenträgers kann dadurch mit Vorteil vermieden werden. Um die Lagerböcke und die über die Lagerböcke aufgenommenen Schwerlast-Ladegüter auf dem Deck des Schiffes oder des Pontons zu bewegen, sind vorzugsweise Antriebsmittel vorgesehen.

Gemäß einer bevorzugten Ausführungsform des Lastenträgers sind die Lagerböcke mit Transportmodulen koppelbar, mittels derer die Lagerböcke entlang der Führungen verfahrbar sind, wobei die Transportmodule vorzugsweise höhenverstellbar sind und/oder mehrere Antriebsachsen aufweisen. Mithilfe der Transportmodule ist eine gezielte und zugleich sichere Bewegung der Lagerböcke und damit des über die Lagerböcke aufgenommenen Ladegutes an Deck des Lastenträgers gewährleistet. Bevorzugt greifen an jedem Lagerbock einer jeweiligen Gruppe von Lagerböcken zwei Transportmodule an einander gegenüberliegenden Stirnseiten an. Als Stirnseiten eines Lagerbockes werden die Bereiche des Lagerbocks bezeichnet, die sich in Längsrichtung des Lastenträgers erstrecken. Die Transportmodule können jeweils mit verschiedenen Lagerböcken gekoppelt werden, wobei die Transportmodule, um eine gleichmäßige Bewegung der das Ladegut aufnehmenden Lagerböcke auf dem Deck zu gewährleisten, signalübertragend mit der elektronischen Steuereinheit oder einer separaten Steuerung verbunden sind. Um die Lagerböcke und die mittels der Lagerböcke aufgenommenen Schwerlast-Ladegüter sicher bewegen zu können, ist jedes Transportmodul vorzugsweise mit mehreren Antriebsachsen ausgerüstet, wodurch sich Lagerböcke und Ladegut problemlos an Deck des Lastenträgers bewegen lassen.

Gemäß einer bevorzugten Ausgestaltung weist der erfindungsgemäße Lastenträger eine Stabilisierungseinrichtung auf, mittels welcher die Neigebewegungen des Lastenträgers vermindert werden. Über die Stabilisierungseinrichtung soll sichergestellt werden, dass selbst bei ungünstigen Witterungsbedingungen, wie zum Beispiel starkem Wind und hohem Wellengang, mögliche daraus resultierende Neigebewegungen um die Längs- und/oder Querachse des Lastenträgers so gering wie möglich ausfallen. Dadurch ist gerade in Kombination mit dem Lagenausgleichssystem ein sicherer Umschlag der auf dem Lastenträger befindlichen Schwerlast-Ladegüter durch eine separat zum Lastenträger vorgesehene Verladeeinheit möglich. Mithilfe der Stabilisierungseinrichtung werden die Neigebewegungen des Lastenträgers bevorzugt auf einen Winkelbereich von etwa +/- 1° oder weniger eingeschränkt.

Vorzugsweise weist die Stabilisierungseinrichtung eine Ballastwasserumwälzanlage mit Ballastwassertanks auf, die innerhalb des Rumpfes des Lastenträgers angeordnet sind und einen Abstand zur Längs- und/oder Querachse des Lastenträgers aufweisen. Mithilfe der Ballastwasserumwälzanlage ist eine wirksame Verringerung der Neigebewegungen des Lastenträgers erreicht. Durch Umpumpen von Ballastwasser zwischen verschiedenen Tanks innerhalb des Rumpfes auf bevorzugt einander gegenüberliegenden Seiten der Längs- und/oder Querachse des Lastenträgers wird den auftretenden Neigebewegungen direkt entgegengewirkt. Dabei wird das Ballastwasser immer entgegen der eigentlichen Bewegung des Schiffes oder Pontons gepumpt, um dessen Schwerpunkt gezielt entgegen der Neigungsbewegung zu verlagern. Es ist von Vorteil, wenn die Ballastwassertanks weit beabstandet von der Längs- oder Querachse angeordnet sind. Als Längsachse des Lastenträgers ist vorliegend die sich parallel in Transportrichtung bzw. Hauptfahrtrichtung erstreckende Körperachse des Lastenträgers definiert. Voraussetzung für eine wirksame Ballastwasserumwälzung ist, dass in kürzester Zeit große Menge an Ballastwasser zwischen den verschieden Tanks bewegt werden, wobei bevorzugt elektrische Kreiselpumpen und/oder Einrichtungen zur Ballastwasserverdrängung mittels Druckbeaufschlagung der Ballastwassertanks eingesetzt werden. Beide Systeme weisen ein aktives bzw. dynamisches Ansprechverhalten auf. Weitere Systeme zur Stabilisierung des Schwimmkörpers bei Seegang sind vorzugsweise ausgewählt aus der Liste bestehend aus: Rollstabilisierungstanks, Zero-Speed Stabilisierungsanlagen bzw. Flossenstabilisierungsanlagen, und Einrichtungen zur aktiven Rollstabilisierung, beispielsweise mittels Propellern, etwa Voith-Schneider-Propellern. Gemäß einer bevorzugten Ausführungsform des erfindungsgemäßen Lastenträgers ist eine Positioniereinrichtung zum Ermitteln der Position des Lastenträgers vorgesehen, welche signalleitend mit einem jeweiligen Antrieb des Lastenträgers zum Halten und/oder Ausrichten einer absoluten Position des Lastenträgers oder einer Position des Lastenträgers relativ zu einem Objekt, wie einer Verladeeinheit oder dergleichen, verbunden ist. Mithilfe der Positioniereinrichtung, welche vorzugsweise über die elektronische Steuereinheit oder direkt mit den verschiedenen Antriebseinrichtungen, wie zum Beispiel dem Hauptantrieb oder den Querstrahlantrieben des Lastenträgers signalleitend verbunden ist, lässt sich eine vorgegebene absolute oder relative Position, beispielsweise während des Umladens der Ladegüter mittels der Verladeeinheit halten. Umwelteinflüsse wie Meeresströmungen oder starker Wind, die Einfluss auf die Position des Lastenträgers nehmen, können dadurch kompensiert und der Lastenträger in einer nahezu ortsfesten Position gehalten werden. Grundsätzlich kann der Lastenträger dabei zu einem Referenzobjekt, insbesondere einer Verladeeinheit an einem Errichterschiff, ausgerichtet werden. Vorzugsweise erfolgt die Positionsermittlung mithilfe von Satellitennavigationsdaten, hydroakkustischen Referenzsystemen, Radarpeilungen, optischen (Laser-)Peileinrichtungen, oder einer Kombination mehrerer dieser Einrichtungen. Besonders bevorzugt kommt ein dynamisches Positionierungssystem wie beispielsweise ein DP-2 System zum Einsatz.

Eine alternative oder optionale Ausgestaltung der Positioniereinrichtung sieht vor, dass die Positioniereinrichtung Sensormittel zur Positionserfassung aufweist, welche zur Erfassung der Anwesenheit eines oder mehrerer Referenzpunkte, vorzugsweise ein oder mehrere mit den Sensormitteln kommunizierende Reflektoren, an dem Objekt eingerichtet sind, gegenüber dem der Lastenträger auszurichten ist. Der Einsatz von Sensormitteln, welche mit Referenzpunkten an dem Objekt kommunizieren gegenüber dem der Lastenträger auszurichten ist, stellt eine einfache und direkte Art der Positionserfassung des Lastenträgers gegenüber dem auszurichtenden Objekt dar. Mithilfe der Sensoren lässt sich beispielsweise der Abstand von zum Beispiel der Bordwand des Lastenträgers zur Bordwand des Errichterschiffes an mehreren Referenzpunkten ermitteln, wodurch gleichzeitig die Ausrichtung des Lastenträgers mit seiner Längsachse in Bezug auf die Längsachse des Errichterschiffes exakt ermittelt werden kann.

Ein weiterer Aspekt der Erfindung betrifft ein Verfahren zum Lagenausgleich von Ladegütern, wie Gründungsstrukturen für Windkraftanlagen oder dergleichen, auf einem Deck eines schwimmfähigen Lastenträgers, insbesondere eines Feederschiffs oder Pontons, umfassend die Schritte:
- Bereitstellen des Ladeguts auf einer Auflagefläche im Deck des Lastenträgers, und
- Bewegen der Auflagefläche relativ zu dem Lastenträger derart, dass Neigebewegungen des Lastenträgers kompensiert werden. Der Erfindung liegt die Erkenntnis zugrunde, dass mithilfe der erfindungsgemäßen Verfahrensschritte ein vorteilhafter Lagenausgleich der Ladegüter während des Verladevorganges mittels einer Verladeeinheit bewirkt ist. Relativbewegungen zwischen Ladegut und Verladeeinheit sind bevorzugt vermieden, wodurch die Arbeitssicherheit bei Verladen verbessert ist. Das Erfassen der Neigebewegungen des Lastenträgers und/oder der Neigebewegungen direkt an der am Lastenträger beweglich aufgenommenen Auflagefläche wird mithilfe von Sensorenmitteln, wie vorzugsweise Neigungssensoren, vorgenommen. Anschließend werden auf Grundlage von der aktuellen Differenz zwischen der Ist-Ausrichtung des Lastenträgers und/oder der Aufstellfläche und der Soll-Ausrichtung des Lastenträgers und/oder der Auflagefläche zur horizontalen Ebene die Neigebewegungen des Lastenträgers und/oder der Auflagefläche ausgleichende Bewegungen für die in ihrer horizontalen Ausrichtung zu haltende Auflagefläche ermittelt. Danach wird die das Ladegut aufnehmende Auflagefläche anhand der ermittelten Bewegungsmaße so verstellt, dass die Neigebewegungen des Lastenträgers kompensiert werden. Die die Neigebewegungen von Lastenträger und/oder Auflagefläche ausgleichenden Bewegungen werden als Stellgrößen für Stellmittel zum Steuern der Bewegung der Auflagefläche ermittelt, was mittels einer elektronischen Steuereinheit erfolgt, welche mit Sensormitteln zum Erfassen der Neigebewegungen von Lastenträger und/oder Auflagefläche verknüpft ist. Das Verstellen der das Ladegut aufnehmenden Auflagefläche erfolgt auf Basis der ermittelten Stellgrößen und mithilfe motorischer Antriebe, welche die Stellmittel aufweisen, die jeweils mit der elektronischen Steuereinheit signalleitend verknüpft ist. Unter einer signalleitenden Verknüpfung ist dabei eine kabelgebundene oder auch kabellose Signalübertragung zu verstehen.

Vorzugsweise werden die Erfassung der Neigebewegungen des Lastenträgers und/oder der Aufstellfläche und die Ermittlung der Differenz zwischen der Ist-Ausrichtung und der Soll-Ausrichtung des Lastenträgers und/oder der Aufstellfläche in vorgegebenen Zeitabständen durchgeführt. Durch die kontinuierliche bzw. fortwährende Messung der Neigebewegungen von Lastenträger und/oder Aufstellfläche und der Ermittlung der Differenz zwischen der Ist-Ausrichtung und der Soll-Ausrichtung von Lastenträger und/oder Auflagefläche ist eine bevorzugt aktuelle Anpassung in der Ausrichtung der Auflagefläche zur Horizontalen bewirkt, mit der sich die Neigebewegungen sehr genau ausgleichen bzw. kompensieren lassen. Dadurch ist erreicht, dass das über die Aufstellfläche aufgenommene Ladegut sich während des Verladevorganges nur geringfügig bewegt. Der Verladevorgang ist vereinfacht und darüber hinaus die Arbeitssicherheit für eine den Verladevorgang vornehmende Person verbessert. Unter einer kontinuierlichen bzw. fortwährenden Erfassung der Neigebewegungen bzw. Ermittlung der Differenz zwischen Ist-Ausrichtung und Soll-Ausrichtung ist eine Abfrageintensität von mehreren Abfragen pro Sekunde bis hin zu mehreren Abfragen pro Zehntelsekunde zu verstehen.

Eine bevorzugte Weiterbildung des erfindungsgemäßen Verfahrens sieht vor, dass der Lastenträger während des Verladevorganges der Ladegüter auf seinem Deck in einer vorgegebenen absoluten Position oder in einer Position relativ zu einem Objekt, wie einer Verladeeinheit oder dergleichen gehalten wird. Damit ist sichergestellt, dass der Lastenträger sich nicht ungewollt von der Verladeeinheit, mithilfe der das Verladen der Ladungsträger vorgenommen werden soll, entfernt oder gegebenenfalls mit dem Objekt kollidiert, so dass beim Verladen eine hohe Sicherheit vorherrscht. Das in Position halten des Lastenträgers zu einem auszurichtenden Objekt wird mithilfe einer Positioniereinrichtung zum Ermitteln einer Lastenträger-Position vorgenommen, welche beispielsweise mit entsprechenden Sensormitteln zum Empfangen von GPS-Daten ausgebildet sein kann. Um den Lastenträger in Position halten zu können, ist die Positioniereinrichtung bevorzugt über die elektronische Steuereinheit mit dem Antrieb des Lastenträgers signalleitend verknüpft. Anhand der ermittelten Positionsdaten oder sich daraus ergebender möglicher Veränderungen in der Position werden die entsprechenden Antriebsmittel des Antriebs betätigt, wie zum Beispiel der Hauptantrieb oder die Querstrahlruder.

Weitere bevorzugte Weiterbildungen des erfindungsgemäßen Verfahrens sind in den Ansprüchen angegeben.

Nachfolgend wird die Erfindung anhand eines möglichen Ausführungsbeispiels unter Bezugnahme auf die beigefügten Figuren näher beschrieben. Hierbei zeigen
- Figur 1: eine perspektivische Ansicht eines schwimmfähigen Lastenträgers, mit auf seinem Deck angeordneten, erfindungsgemäßen Lagerböcken,
- Figur 2: eine perspektivische Ansicht eines mit Transportmodulen gekoppelten Lagerbockes nach Figur 1, und
- Figur 3: eine perspektivische Teilansicht eines erfindungsgemäßen Lagerbockes nach Figur 2.

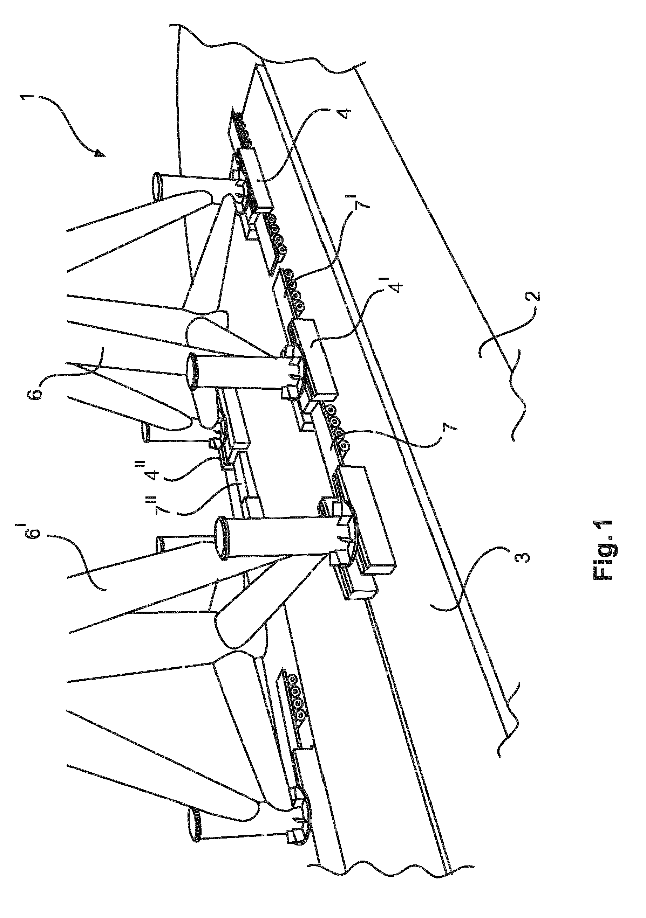

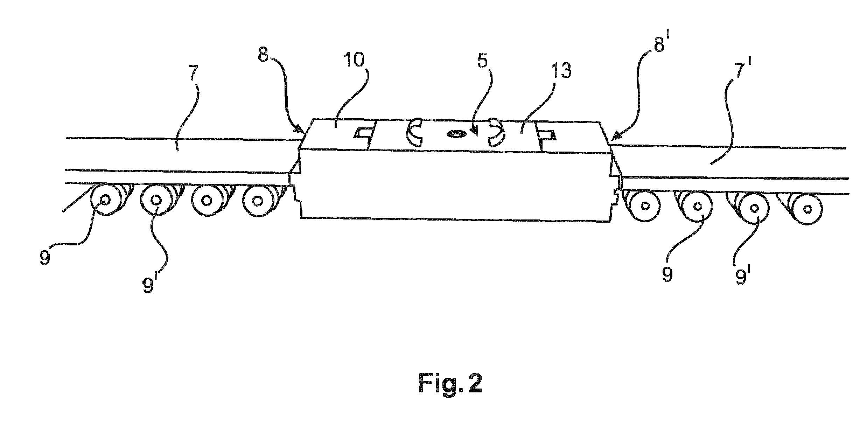

Figur 1 zeigt eine perspektivische Ansicht eines schwimmfähigen Lastenträgers 1 mit einem Rumpf 2 und einem Deck 3, auf dem mehrere beabstandet zueinander angeordnete Lagerböcke 4, 4', 4" angeordnet sind. Jeder Lagerbock 4, 4', 4" weist eine Teilfläche 5 (Figur 2) für mittels des Lastenträgers 1 zu transportierende Schwerlast-Ladegütern 6, 6' auf, wie beispielsweise Gründungsstrukturen für Offshore-Windkraftanlagen. Die Teilflächen 5 bilden jeweils in Gruppen untereinander eine Auflagefläche aus, die relativ beweglich zum Lastenträger 1 ausgebildet ist, derart, dass Neigebewegungen des Lastenträgers 1 ausgeglichen bzw. kompensiert werden. Über die beweglich zum Lastenträger gehaltene Auflagefläche ist erreicht, dass die auf dem Lastenträger transportierten Ladegüter, insbesondere während eines Verladevorganges der Ladegüter auf See durch eine nicht näher dargestellte Verladeeinheit derart ruhig gehalten werden können, dass diese sich zwar relativ zum Lastenträger bewegen aber absolut zur Umgebung betrachtet in Ruhelage sind. In Abhängigkeit von den aufzunehmenden Ladegütern werden drei oder mehr in ihrer Höhe verstellbar ausgebildete Lagerböcke zu einer Gruppe von Lagerböcken zusammengefasst, die von einer nicht näher dargestellten elektronischen Steuereinheit gesteuert werden. Mittels der Steuereinheit wird die Höhe der Teilflächen 5 der Lagerböcke 4, 4', 4" und damit die Neigung der sich zwischen den Lagerböcken aufspannenden Ebene mit der Auflagefläche relativ zum Lastenträger so angepasst, dass sie in einer Ebene parallel zur Horizontalen bleibt. Die notwendigen Ausgleichbewegungen in Form einer Höhenverstellung der Lagerböcke 4, 4', 4" werden dabei in Abhängigkeit von den auftretenden Neigebewegungen vorgenommen. Die elektronische Steuereinheit ist signalleitend mit nicht gezeigten Sensormitteln zum Erfassen der Neigebewegungen des Lastenträgers 1 und/oder der Neigebewegungen der durch die Aufstellflächen 5 der Lagerböcke 4, 4', 4" ausgebildeten Auflagefläche verbunden. Darüber hinaus sind die Lagerböcke 4, 4', 4" entlang einer oder mehrerer Führungen auf dem Deck 3 mittels mehrerer Transportmodule 7, 7', 7" des Lastenträgers 1 beweglich angeordnet. Für eine aufeinander abgestimmte gleichmäßige Bewegung der zu einer Gruppe zusammengefassten Lagerböcke an Deck des Lastenträgers 1 sind die Transportmodule 7, 7', 7" über die nicht gezeigte Steuereinheit oder wahlweise eine separate Steuerung miteinander verknüpft.

In Figur 2 ist einer der Lagerböcke 4, 4', 4" gezeigt, an dessen einander gegenüberliegenden Stirnseiten 8, 8' jeweils ein Transportmodul 7, 7' reversibel gekoppelt ist, über die der Lagerbock entlang einer auf dem Deck 3 des Lastenträgers 1 ausgebildeten Führung die Lagerböcke verfahrbar sind. Jedes Transportmodul weist eine Vielzahl von parallel nebeneinander angeordneten Radachsen 9, 9' auf, von denen mehrere als Antriebsachsen ausgebildet sind. Mittels der Transportmodule wird ein jeweils darüber gekoppelter Lagerbock 4, 4', 4" parallel zur Längsachse des Lastenträgers 1 bewegt. Als Längsachse des Lastenträgers ist vorliegend die sich parallel in Transportrichtung erstreckende Körperachse des Lastenträgers definiert. Neben dem Lagenausgleichssystem mit seinem in der Höhe verstellbaren Lagerböcken, mittels denen die auf dem Deck 3 des Lastenträgers 1 aufgenommenen Ladegüter 6, 6' absolut gesehen in Ruhelage gehalten werden, ist zusätzlich eine Stabilisierungseinrichtung vorgesehen, mittels der den Neigebewegungen des Lastenträgers um dessen Längsachse oder um dessen Querachse soweit entgegenwirkt werden, dass der Lastenträger sich nur noch in einem Winkelbereich von etwa +/- 1° um die jeweilige Längs-oder Querachse bewegt.

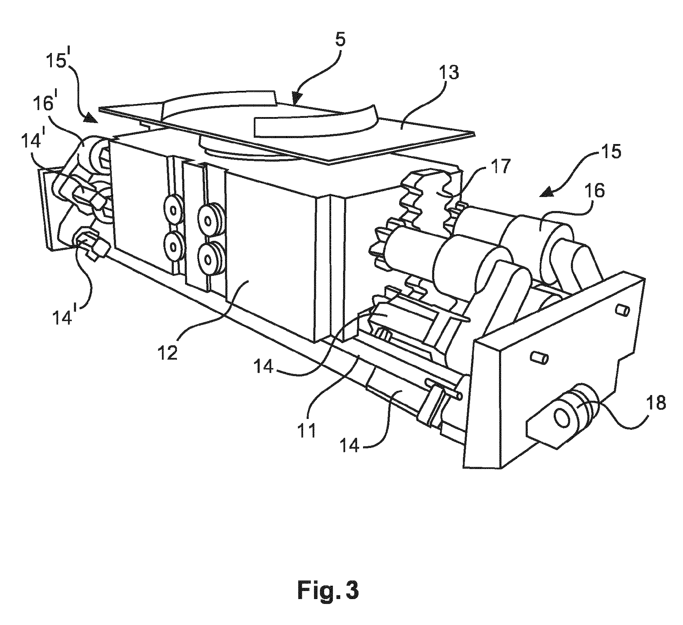

Figur 3 zeigt eine Detailansicht eines erfindungsgemäßen Lagerbocks 4, der um dessen Aufbau und Funktionsweise zu verdeutlichen ohne das in Figur 2 gezeigte obere Gehäuseteil 10 dargestellt ist. Jeder Lagerbock 4, 4', 4" weist ein Rahmengestell 11 auf, an dem ein im Wesentlichen senkrecht zum Deck 3 des Lastenträgers geführtes Führungsteil 12 aufgenommen ist. Am oberen Ende des Führungsteiles 12 ist eine Auflagerplatte 13 angeordnet, die in ihrer Ausrichtung zur Bewegungsachse des Führungsteiles 12 verstellbar gelagert ist. Beim Anheben und Absenken des Führungsteiles 10 kann die am Führungsteil 10 beweglich aufgenommene Auflagerplatte ihre Neigung zur Bewegungsachse des Führungsteiles bevorzugt in einem Winkelbereich von mindestens +/- 1° verändern. Jeder Lagerbock 4 weist Stellmittel 14, 14' für die Höhenverstellung seiner die Auflagefläche für das Ladegut ausbildende Aufstellfläche 5 auf. Die Stellmittel 14, 14' sind elektrische Stellmotoren, die jeweils mittels eines Koppelgetriebes 15, 15' mit dem Führungsteil 10 Kräfte und Bewegungen übertragend verbunden sind. Jedes Koppelgetriebe 15 15' weist Planetengetriebe 16, 16' auf, die antriebsseitig mit dem als Stellmotor ausgebildeten Stellmittel 14, 14' und abtriebsseitig mit einem Zahnstangentrieb 17 gekoppelt sind. Über den Zahnstangentrieb 17 erfolgt die Umwandlung der durch das Stellmittel 14, 14' erzeugten Drehbewegung in eine senkrecht zum Deck gerichtete Hubbewegung des Führungsteiles 12 und der Auflagerplatte 13. An den Stirnseiten 8, 8' des Rahmengestells 11 des Lagerbockes 4 ist jeweils eine Öse 18 zum Eingriff der mit dem Lagerbock koppelbaren Transportmodule 7, 7', 7" (Figur 1) ausgebildet.

## Patentansprüche

1. Schwimmfähiger Lastenträger, insbesondere Feederschiff oder Ponton, zum Transport von Ladegütern (6, 6'), wie Gründungsstrukturen für Windkraftanlagen oder dergleichen, mit wenigstens einem Deck (3) für die aufzunehmenden Ladegüter (6, 6'), **gekennzeichnet durch**
eine relativ zum Lastenträger (1) auf dessen Deck (3) beweglich ausgebildete Auflagefläche für das Ladegut (6, 6') und
eine elektronische Steuereinheit, welche zur Steuerung der Bewegung der Auflagefläche derart eingerichtet ist, dass Neigebewegungen des Lastenträgers (1) kompensiert werden.

2. Lastenträger nach Anspruch 1,
**dadurch gekennzeichnet, dass** die Auflagefläche aus mehreren beabstandet zueinander angeordneten Teilflächen auf jeweiligen Lagerböcken (4, 4', 4") ausgebildet ist, wobei die Lagerböcke (4, 4', 4") höhenverstellbar sind.

3. Lastenträger nach einem der Ansprüche 1 und 2,
**dadurch gekennzeichnet, dass** auf dem Deck (3) jeweils drei oder mehr Lagerböcke (4, 4', 4") zu einer Gruppe von Lagerböcken zusammengefasst sind, die eine sich zwischen den Lagerböcken (4, 4', 4") aufspannende Ebene definieren.

4. Lastenträger nach einem der Anspruch 2 und 3,
**dadurch gekennzeichnet, dass** jedem Lagerbock (4, 4', 4") ein Stellmittel (14, 14') für seine Höhenverstellung zugeordnet ist, wobei das Stellmittel (14, 14') vorzugsweise ein elektrischer Stellmotor oder ein über ein Druckmedium ansteuerbarer Arbeitszylinder ist.

5. Lastenträger nach einem der Ansprüche 2 bis 4,
**dadurch gekennzeichnet, dass** jeweils der Lagerbock (4, 4', 4") und das Stellmittel (14, 14') mittels eines Koppelgetriebes (15, 15') miteinander gekoppelt sind, wobei das Koppelgetriebe (15, 15') bevorzugt Planetengetriebe (16, 16') aufweist.

6. Lastenträger nach Anspruch 5,
**dadurch gekennzeichnet, dass** jeder Lagerbock (4, 4', 4") eine Auflagerplatte (13) und ein mit dem Koppelgetriebe (15, 15') gekoppeltes Führungsteil (12) für eine gerichtete Bewegung der Auflagerplatte (13) im Wesentlichen senkrecht zum Deck (3) aufweist, wobei die Auflagerplatte (13) in ihrer Ausrichtung zur Bewegungsachse des Führungsteiles (12) verstellbar gelagert ist.

7. Lastenträger nach einem der Ansprüche 4 bis 6,
die elektronische Steuereinheit, welche signalleitend mit den Stellmitteln (14, 14') für die Lagerböcke (4, 4', 4") gekoppelt und eingerichtet ist, die Höhe der Lagerböcke (4, 4', 4") in Abhängigkeit von den Neigebewegungen des Lastenträgers (1) und/oder der Auflagefläche derart anzupassen, dass die zwischen den Lagerböcken jeweils einer Gruppe aufgespannte Ebene im Wesentlichen parallel zur Horizontalen ausgerichtet bleibt.

8. Lastenträger nach einem der Ansprüche 4 bis 7,
**dadurch gekennzeichnet, dass** die elektronische Steuereinheit signalleitend mit Sensormitteln zum Erfassen der Neigebewegungen des Lastenträgers (1) und/oder der Auflagefläche verbunden ist und zum Ermitteln der die Neigebewegungen des Lastenträgers (1) und/oder der Auflagefläche ausgleichenden Stellgrößen für die Stellmittel (14, 14') in Abhängigkeit der erfassten Neigebewegungen ausgebildet ist.

9. Lastenträger nach einem der Ansprüche 2 bis 8,
**dadurch gekennzeichnet, dass** die Lagerböcke (4, 4', 4") entlang einer oder mehrerer Führungen auf dem Deck (3) des Lastenträgers (1) beweglich angeordnet sind, vorzugsweise parallel zur Längsachse des Lastenträgers, wobei vorzugsweise die Lagerböcke (4, 4', 4") mit Transportmodulen (7, 7', 7") koppelbar sind, mittels denen die Lagerböcke (4, 4', 4") entlang der Führungen verfahrbar sind, wobei die Transportmodule (7, 7', 7") vorzugsweise höhenverstellbar sind und/oder mehrere Antriebsachsen aufweisen.

10. Lastenträger nach einem der vorstehenden Ansprüche,
**dadurch gekennzeichnet, dass** zusätzlich zu der beweglich auf dem Deck (3) aufgenommenen Auflagefläche für das Ladegut (6, 6') eine Stabilisierungseinrichtung vorgesehen ist, mittels der die Neigebewegungen des Lastenträgers (1) vermindert werden, wobei vorzugsweise die Stabilisierungseinrichtung eine Ballastwasserumwälzanlage mit Ballastwassertanks aufweist, die innerhalb des Rumpfes (2) des Lastenträgers (1) angeordnet sind und einen Abstand zur Längs- und /oder Querachse des Lastenträgers (1) aufweisen.

11. Lastenträger nach, einem der vorstehenden Ansprüche,
**gekennzeichnet durch** eine Positioniereinrichtung zum Ermitteln der Position des Lastenträgers (1), welche signalübertragend mit einem jeweiligen Antrieb des Lastenträgers verbunden ist, zum Halten und/oder Ausrichten einer absoluten Position des Lastenträgers oder einer Position des Lastenträgers relativ zu einem Objekt, wie Verladeeinheit oder dergleichen, wobei vorzugsweise die Positioniereinrichtung Sensormittel zur Positionserfassung aufweist, welche zur Erfassung der Anwesenheit eines oder mehrerer Referenzpunkte, vorzugsweise mit den Sensormitteln kommunizierende Reflektoren, an dem Objekt eingerichtet sind, gegenüber dem der Lastenträger auszurichten ist.

12. Verfahren zum Lagenausgleich von Ladegütern, wie Gründungsstrukturen für Windkraftanlagen oder dergleichen, auf einem Deck eines schwimmfähigen Lastenträgers, insbesondere eines Feederschiffs oder Pontons, umfassend die Schritte:
- Bereitstellen des Ladeguts auf einer Auflagefläche im Deck des Lastenträgers, und
- Bewegen der Auflagefläche relativ zu dem Lastenträger derart, dass Neigebewegungen des Lastenträgers kompensiert werden, wobei vorzugsweise die Auflagefläche durch mehrere Teilflächen gebildet wird, die jeweils auf Lagerböcken ausgebildet sind, und wobei das Steuern umfasst:
- Höhenverstellen der Lagerböcke in Abhängigkeit der Neigebewegungen des Lastenträgers.

13. Verfahren nach Anspruch 12,
wobei das Verfahren den Schritt umfasst:
- Erfassen der Neigebewegung des Lastenträgers und/oder der Auflagefläche, vorzugsweise mittels der elektronischen Steuereinheit, und
- Ermitteln der die Neigebewegung des Lastenträgers und/oder der Auflagefläche ausgleichenden Stellgrößen für an den Lagerböcken vorgesehene Stellmittel in Abhängigkeit der erfassten Neigebewegungen.

14. Verfahren nach Anspruch 12 oder 13, umfassend den Schritt:
- Vermindern der Neigebewegungen des Lastenträgers mittels einer Stabilisierungseinrichtung, wobei die Stabilisierungseinrichtung vorzugsweise eine Belastungsumwälzungsanlage aufweist, und der Schritt des Stabilisierens vorzugsweise das Umwälzen von Wasser innerhalb des Schiffsrumpfes derart umfasst, dass der Schwerpunkt des Lastenträgers entgegen der Neigungsbewegung des Lastenträgers verlagert wird.

15. Verfahren nach einem der Ansprüche 12 bis 14, umfassend einen, mehrere oder sämtliche der Schritte:
- Ermitteln der Position des Lastenträgers mittels einer Positioniereinrichtung, welche vorzugsweise signalübertragend mit einem jeweiligen Antrieb des Lastenträgers verbunden ist,
- Ansteuern des Antriebs des Lastenträgers derart, dass die absolute Position des Lastenträgers oder eine Position des Lastenträgers relativ zu einem vorbestimmten Objekt wie beispielsweise einer Verladeeinheit oder dergleichen.

16. Verfahren nach einem der Ansprüche 12 bis 15, umfassend den Schritt:
- Erfassen der Anwesenheit eines oder mehrerer Referenzpunkte, vorzugsweise mit den Sensormitteln,
- Kommunizieren der Reflektoren mittels Sensormitteln zur Positionserfassung, und
- Ausrichten des Lastenträgers gegenüber dem Objekt in Abhängigkeit der ermittelten Positionsdaten.
